# DEMANDE DE BREVET EUROPEEN

(11) **EP 4 491 360 A1**
(43) Date de publication de la demande: **15.01.2025**
(21) Numéro de dépôt: 24173605.7
(22) Date de dépôt: 30.04.2024
(51) Int. Cl.: B27D 1/00, B27L 5/00, A01G 13/02

(54) **DISPOSITIF DE PROTECTION DE PLANTS VÉGÉTAUX EN FEUILLE DE BOIS COUSUE ET PROCÉDÉ DE MISE EN OEUVRE**

(30) Priorité: 12.07.2023 FR 2307492
(71) Demandeur: Smart Corp, 60320 Saint-Sauveur (FR)
(72) Inventeur: DEBACKER, Frédéric, 60320 Saint-Sauveur (FR)
(74) Mandataire: Rataboul, Xavier

(57) **Abrégé**

L'invention concerne un dispositif de protection de plants végétaux comprenant une feuille de bois (1a) déroulé ou tranché présentant une première dimension longitudinale (h) parallèle à une direction (X-X) d'extension des fibres du bois et une deuxième dimension transversale (L) perpendiculaire à la direction longitudinale (h), la feuille (1a) comprenant une pluralité de lignes de couture de fil textile (2) s'étendant transversalement, perpendiculairement à la direction longitudinale (X-X).

Le dispositif de protection de plants végétaux est biodégradable après la durée de protection nécessaire, respectueux des animaux, résistant toute en permettant à l'arbre en croissance de le casser pour ne pas avoir à le retirer, rendant son exploitation peu coûteuse.

## Description

L'invention concerne le domaine technique de la fabrication d'objets en bois, en particulier en bois déroulé ou tranché, notamment en application dans le domaine de l'horticulture et de la sylviculture.

Il est connu d'utiliser des protections tubulaires en plastique que l'on dispose autour des jeunes plants afin de les protéger des animaux, notamment.

En particulier, en forêt, les cervidés utilisent les arbres pour frotter leurs bois et les débarrasser du velours séché une fois la croissance osseuse des bois terminée.

Le frottement, d'une part, mais également les coups d'andouillers d'autre part abîment les arbres, surtout lorsqu'ils sont jeunes. Les plants sont ainsi cassés, débarrassés de leur écorce protectrice, tordus, parfois même déterrés.

Les jeunes plants sont également broutés par les animaux pour se nourrir.

Enfin, ils peuvent subir une concurrence importante des plantes sauvages qui peut aboutir à la mort du plant.

Pour éviter cela, il est connu d'utiliser des dispositifs de protection tubulaires en plastique que l'on dispose autour des plants. L'un des produits les plus connus est commercialisé sous la marque Tubex^{®}.

Pour les fixer, soit on les enterre partiellement, soit, de préférence, on les fixe à un tuteur lui-même enterré. L'avantage de ces protections est leur faible coût.

Une fois le plant suffisamment développé, soit l'arbre éclate le tube, soit les exploitants les retirent.

En pratique, beaucoup sont laissés dans la nature, provoquant une pollution plastique durable non négligeable.

Il a déjà été proposé d'utiliser un plastique recyclé. Si cette solution évite la consommation d'hydrocarbure pour sa synthèse, elle ne résout pas le problème de la pollution, notamment en fin de vie.

Il a également été proposé de remplacer le plastique par du carton multicouche, qui présente l'intérêt d'être compostable. Un tel produit est, par exemple, commercialisé sous le nom de « Biowit NT BTR ».

Cependant, il résiste mal aux coups de bois et à la perforation, ainsi qu'à certaines conditions climatiques, ce qui le dégrade trop rapidement par rapport au temps nécessaire de protection, typiquement compris entre 3 et 6 ans. Il faut donc les remplacer ce qui est coûteux.

Pour améliorer cela, il a été proposé d'enduire le carton d'un matériau de protection, mais cela influence défavorablement la biodégradabilité et la pollution résiduelle.

Enfin, il a aussi été proposé d'utiliser des piquets en bois scié ou fendu, ces piquets étant attachés les uns aux autres par du fil de fer. Un tel produit est, par exemple, commercialisé sous le nom de « WitaPro Tree shelter ».

Si ces produits présentent une bonne résistance aux frottements, ils sont rapidement abîmés lorsque les bois des cervidés se prennent dans le fil de fer, en particulier à la jonction entre les piquets, risquant au passage de blesser les animaux.

Le document FR2785498 décrit un dispositif de protection de plants végétaux en matière biodégradable dont le bord supérieur est évasé ou recourbé pour ne pas blesser l'écorce des arbres. Il prévoit un mode de réalisation avec une feuille de bois recouverte d'une feuille en plastique, mais qui n'est techniquement et économiquement pas réalisable en raison du bord supérieur recourbé, et un second mode de réalisation avec une nappe de fibres naturelles comprimée et potentiellement extrudée.

Il existe donc un besoin important de proposer un dispositif de protection de plants végétaux biodégradable après la durée de protection nécessaire, respectueux des animaux, résistant toute en permettant à l'arbre en croissance de le casser pour ne pas avoir à le retirer, rendant son exploitation peu coûteuse.

Les feuilles de bois déroulé ou tranché sont connues pour fabriquer du contreplaqué ou des emballages légers. Cependant, ces feuilles de bois déroulé ou tranché sont également connues pour être très fragiles dans le sens des fibres, car la coupe se fait justement le long du sens des fibres. Il suffit de la plier pour la fendre et la casser.

Le déroulage et le tranchage se font à l'aide d'une lame non dentée, avec un mouvement respectif de la lame et de la bille de bois qui est unidirectionnel, par opposition au sciage dont le mouvement est bidirectionnel et qui génère de nombreux copeaux.

Le tranchage est une découpe le long de la bille de bois, dans le sens des fibres, à l'aide d'une lame qui s'abaisse en force contre la bille de bois à chaque coupe. Une fois la feuille découpée, la bille de bois ou la lame est décalée de l'épaisseur de la feuille à trancher, puis la lame est à nouveau abaissée en force pour obtenir la feuille de bois.

Cette découpe est séquentielle et ne permet d'obtenir des feuilles que d'une largeur maximale égale au diamètre maximal de la bille de bois. En outre, les feuilles obtenues par le tranchage d'une bille n'ont pas toutes la même largeur.

Bien que le tranchage soir une technique adaptée à la formation de feuilles de bois selon la présente invention, on préférera le déroulage qui permet d'obtenir une feuille de grande largeur, ou au moins d'obtenir des feuilles de largeurs identiques.

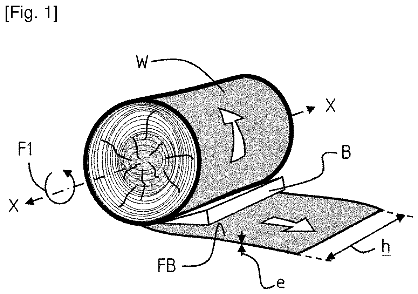

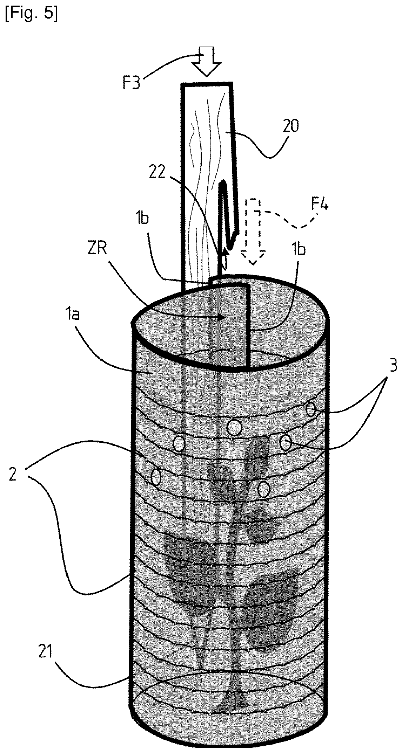

Ainsi, comme le montre la figure 1, le bois déroulé est obtenu en appliquant une lame B le long d'une bille de bois B et orientée sensiblement tangentiellement à la bille W, puis en faisant tourner la bille de bois dans le sens de la flèche F1 autour de son axe longitudinal X-X, qui est aussi la direction des fibres du bois. Il en résulte l'obtention d'une feuille de bois FB de hauteur h sensiblement égale à la longueur de la bille de bois, d'épaisseur e généralement comprise entre 1 et 5 millimètres et dont la longueur L dépend de l'utilisation qui sera faite de de la feuille de bois. Dans l'exemple d'application décrit par la suite, la longueur L est liée au diamètre que l'on souhaitera obtenir pour la protection tubulaire. La longueur L représente le périmètre de la protection tubulaire, éventuellement auquel on ajoute la longueur de la zone de chevauchement des bords verticaux de la feuille (voir figure 5).

L'idée qui sous-tend l'invention est d'utiliser une feuille de bois déroulé et de la renforcer par des lignes de fils textiles en matériau biodégradable cousues dans la feuille de bois déroulé perpendiculairement aux fibres. Cette combinaison permet d'obtenir une feuille qui ne se déchire pas facilement ou dont les morceaux restent solidaires. Elle évite également que les bois des animaux ne se prennent dans une anfractuosité puisque la feuille est lisse, continue, et que la couture est tendue et très peu épaisse. Dans le cas extrême et très improbable où le bois ou une griffe d'un animal arriverait à passer entre la couture et le bois, le fil textile romprait localement, ne blessant pas l'animal, et n'entamant que de manière très marginale la résistance globale de la feuille.

Ainsi, selon l'invention a pour objet un dispositif de protection de plants végétaux, comprenant une feuille de bois déroulé ou tranché présentant une première dimension longitudinale parallèle à une direction d'extension des fibres du bois et une deuxième dimension transversale perpendiculaire à la direction longitudinale, dans lequel la feuille comprend une pluralité de lignes de couture de fil textile s'étendant transversalement, perpendiculairement à la direction longitudinale, la feuille de bois étant enroulée sur elle-même ou destinée à être enroulée sur elle-même autour d'un plant végétal.

Selon d'autres modes de réalisation :
- lorsque la feuille est enroulée sur elle-même, les bords longitudinaux de la feuille peuvent être en regard l'un de l'autre ;
- lorsque la feuille est enroulée sur elle-même, elle peut présenter une zone de recouvrement des bords longitudinaux de la feuille ;
- le dispositif peut comprendre, en outre, un piquet muni d'une pointe et d'une encoche agencée à une distance de la pointe telle qu'en position d'utilisation, l'encoche recouvre les bords longitudinaux de la feuille et maintient la feuille enroulée sur elle-même ;
- les bords longitudinaux de la feuille peuvent être maintenus l'un contre l'autre ou l'un en regard de l'autre par au moins une ligne de couture.
- la feuille de bois peut présenter une épaisseur comprise en 1 et 3 millimètres ;
- les lignes de coutures peuvent être espacées d'une distance comprise entre 1 et 15 centimètres, de préférence entre 8 et 10 centimètres ;
- les lignes de coutures peuvent présenter des points de percement de la feuille de bois espacés d'une distance comprise entre 5 et 20 millimètres ;
- le fil textile peut être dans une matière choisie parmi les fibres naturelles telles que le lin, ou le coton ;
- la feuille de bois peut comprendre une pluralité de trous (3) de passage de la lumière ; et/ou
- le bois peut être imprégné d'une solution comprenant au moins un des éléments pris parmi : un traitement phytosanitaire, un engrais, un répulsif ou un mélange de ceux-ci.

L'invention a également pour objet un procédé de mise en oeuvre d'un dispositif de protection de plants végétaux précédent, comprenant les étapes suivantes :
α) sélectionner une feuille de bois cousue précédente ;
β) enrouler la feuille de bois sur elle-même ;
γ) disposer la feuille de bois enroulée autour d'un plant végétal à protéger et la maintenir dans cette position à l'aide d'un moyen de fixation.

D'autres caractéristiques de l'invention seront énoncées dans la description détaillée ci-après, faite en référence aux dessins annexés, et qui illustrent, respectivement :
[Fig. 1] une vue schématique en perspective du procédé de déroulage de bois selon l'art antérieur ;
[Fig. 2], une vue schématique de face d'une feuille de bois comme dispositif de protection de plant végétal selon l'invention, et comprenant une pluralité de lignes de couture transversales par rapport à la direction X-X des fibres du bois ;
[Fig. 3], une vue schématique en perspective d'un premier exemple de réalisation d'un procédé de fabrication d'une feuille de bois cousue comme dispositif de protection de plant végétal selon l'invention ;
[Fig. 4], une vue schématique en perspective d'un deuxième exemple de réalisation d'un procédé de fabrication d'une feuille de bois cousue comme dispositif de protection de plant végétal selon l'invention ; et
[Fig. 5] une vue schématique en perspective d'une utilisation préférée de la feuille de bois cousue comme tube de protection de plant végétal selon l'invention.

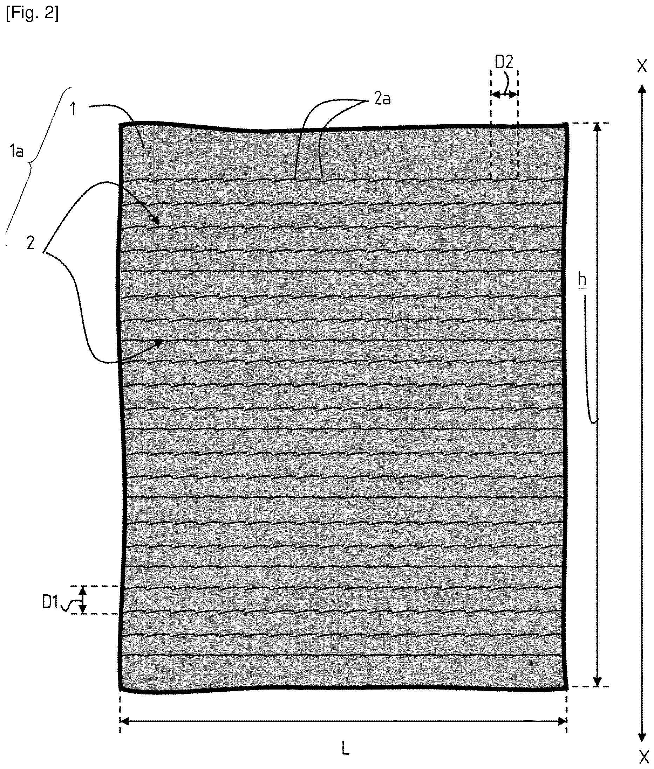

La figure 2 illustre une feuille de bois 1a obtenue selon un premier procédé de fabrication. La feuille de bois 1a utilisée comme dispositif de protection de plant végétal selon l'invention comprend une feuille de bois 1 obtenue après déroulage d'une bille de bois selon le procédé illustré en figure 1, et une pluralité de lignes de couture 2 de fil textile s'étendant transversalement, perpendiculairement à la direction longitudinale. Selon l'invention, les lignes de couture sont présentes, de préférence à intervalles réguliers, sur toute la hauteur de la feuille (selon la direction longitudinale) et pas uniquement aux extrémités. Il est ainsi possible de renforcer la feuille de bois sur toute sa hauteur et sa largeur simplement par des lignes de couture en fil biodégradable (par exemple en coton), de sorte qu'en cas de fissure par un choc dû à un animal, les parties de feuille restent solidaires grâce aux lignes de couture. La densité des fils de couture (c'est-à-dire le nombre de fils de couture par unité de longueur, par exemple par centimètre ou par dizaine de centimètres) le long de la direction longitudinale est à adapter en fonction de la résistance souhaitée et du coût de fabrication.

La feuille de bois 1a présente une première dimension longitudinale h parallèle à une direction X-X d'extension des fibres du bois et une deuxième dimension L transversale et perpendiculaire à la direction longitudinale X-X.

Dans l'application décrite par la suite, la dimension longitudinale h est la hauteur du dispositif de protection tubulaire en position d'utilisation, et la dimension transversale L correspond au périmètre du dispositif de protection tubulaire en position d'utilisation, ou au périmètre auquel on ajoute la longueur de la zone de recouvrement des bords, comme illustré en figure 5.

Les lignes de coutures 2 sont obtenues par percement du bois avec une aiguille, et par enfilage selon un motif de couture déterminé par un système de bobine et canette classique.

L'aiguille doit être choisie pour être suffisamment résistante pour percer le bois, et la machine à coudre doit être réglée pour permettre ledit perçage.

Le motif de couture illustré est un point droit noué à deux fils, c'est-à-dire que deux fils s'entrelacent au niveau de chaque trou, les trous étant sensiblement alignés.

Bien entendu, d'autres motifs et d'autres techniques telles que l'entre bouclage sont possibles, avec un ou plusieurs fils.

Il est préféré de réaliser la feuille 1 pour qu'elle présente une épaisseur comprise en 1 et 3 millimètres, de préférence entre 1,5 et 2,5 millimètres, avantageusement 2 millimètres. Cette épaisseur est optimale pour permettre la couture avec une machine sans casser la feuille pendant l'opération de couture.

Cette épaisseur permet également à la feuille d'être enroulée sur elle-même sans la fendre.

Dans le cadre de l'invention, la couture peut être avantageusement réalisée sur bois frais ou sur bois maintenu humide pour empêcher toute fissure de la feuille 1 lors des percements pour la couture.

Une épaisseur comprise entre 1 et 2 millimètres est également favorable à cette utilisation puisqu'avec des bois clairs tels que le hêtre, la feuille obtenue est suffisamment fine pour laisser passer la lumière du soleil, ce qui est bénéfique à la croissance du plant. Comme illustré en figure 5, il est également possible, alternativement ou en combinaison, de prévoir une pluralité de trous 3 de passage direct de la lumière. La taille de ces trous est choisie pour empêcher qu'un bois de cervidé ne puisse le pénétrer.

Alternativement ou en combinaison, les feuilles de bois 1-1\a peuvent subir un traitement de retrait partiel de la lignine pour augmenter le caractère translucide des feuilles et la transmission de lumières au plant.

Afin d'assurer une bonne résistance à la feuille de bois, malgré sa fragilité longitudinale dans le sens des fibres, les lignes de coutures sont espacées d'une distance D1 de un à quelques centimètres, de préférence comprise entre 1 et 15 centimètres, de préférence entre 8 et 10 centimètres.

Bien entendu, on adaptera le nombre de lignes 2 de couture par unité de longueur dans la direction X-X, ainsi que la taille des points de couture (distance D2 entre deux points de percement 2a de la feuille de bois dans la direction transversale) en fonction de la résistance souhaitée, des contraintes subies par la feuille de bois, de l'essence de bois utilisé, de l'épaisseur de la feuille 1, de la souplesse et de la durabilité souhaitées par rapport à la durée de vie requise pour l'usage envisagé.

Par exemple, dans le cadre de l'utilisation d'une feuille de bois cousue 1a, en frêne, comme tube de protection de plants végétaux selon l'invention, les lignes de coutures sont avantageusement espacées d'une distance comprise entre 2 et 3 centimètres, et l'espacement D2 entre deux points de percement 2a de la feuille de bois est avantageusement compris entre 5 et 20 millimètres.

Un avantage particulièrement intéressant de l'utilisation d'une feuille de bois comme tube de protection de plants végétaux est que le bois, en raison de sa faible épaisseur, peut facilement être imprégné d'une solution telle qu'un traitement phytosanitaire, un engrais, un répulsif ou un mélange de ceux-ci.

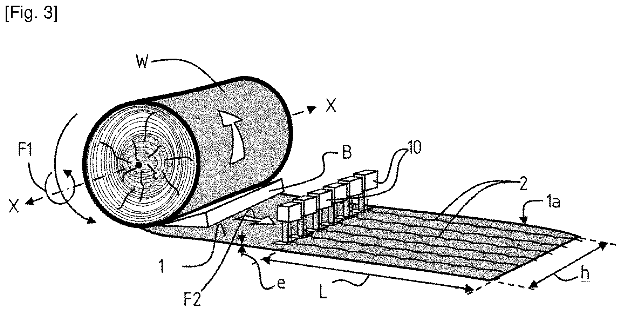

La figure 3 illustre un exemple de réalisation d'un procédé permettant d'obtenir une feuille de bois cousue 1a par déroulage. La personne du métier pourra l'adapter au tranchage.

Ce procédé comprend les étapes suivantes :
a) on dispose une bille de bois W dans un dispositif de mise en rotation (non illustré) selon un axe longitudinal X-X de la bille W, cet axe étant sensiblement parallèle à la direction d'extension des fibres du bois ;
b) on met ensuite en rotation la bille de bois W puis appliquer longitudinalement une lame B contre la bille de bois de manière sensiblement tangentielle de manière à découper une feuille de bois 1 d'une épaisseur comprise entre 1 et 5 millimètres selon l'essence du bois utilisé, sensiblement parallèlement à la direction d'extension des fibres du bois ;
c) la feuille de bois 1 ainsi obtenue est ensuite dirigée dans le sens des flèches F2 vers une ou plusieurs machines à coudre agencées de manière à y coudre une pluralité de lignes de couture 2 sensiblement perpendiculairement à la direction d'extension des fibres du bois, et d'obtenir une feuille de bois cousue 1a comme dispositif de protection de plant végétal selon l'invention.

Sur la figure 3, six têtes de couture 10 sont illustrées, pouvant appartenir à six machines à une tête, ou à une machine multitêtes par exemple.

Dans ce mode de réalisation, la feuille de bois 1a est ainsi cousue en continu.

Elle peut ensuite être découpée à la longueur L souhaitée pour former, en utilisation, des tubes de diamètres adaptés selon l'espèce de plant, par exemple.

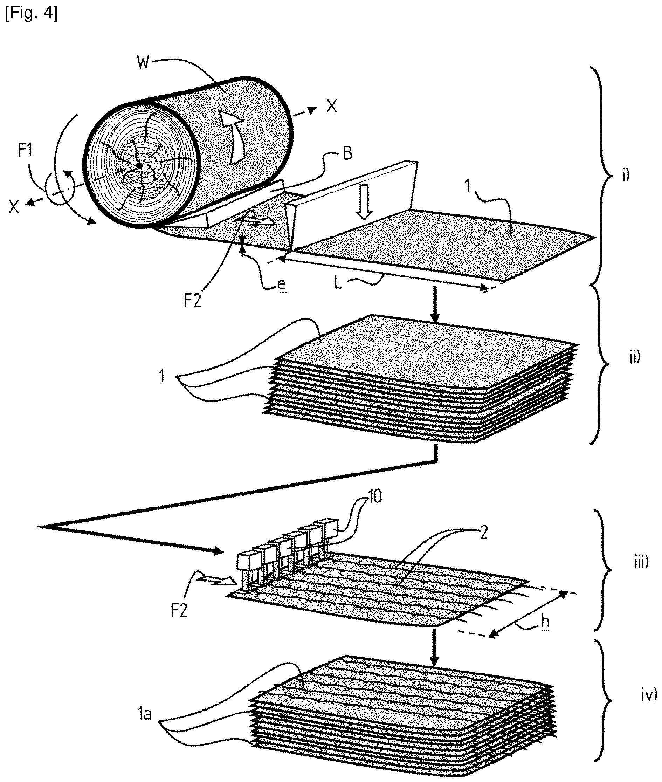

Alternativement, comme illustrée en figure 4, la feuille de bois peut être déroulée, puis stockée et/ou transportée vers le poste de couture. Il est alors possible de lui faire subir un traitement, par exemple pour faciliter la couture ou pour le rendre plus translucide.

Plus précisément, le bois est déroulé à l'étape i) et découpé en une feuille 1.

Les feuilles de bois 1 ainsi découpées sont empilées à l'étape ii). Elles peuvent être stockées et/ou transmises directement à l'étape iii) où chaque feuille 1 est cousue avec une pluralité de lignes de coutures pour obtenir une feuille de bois cousue 1a.

L'intérêt de ce procédé de couture des feuilles une par une, et non en continu comme en figure 3, permet de prévoir des points d'arrêt aux extrémités de chaque ligne de couture 2.

Les feuilles de bois cousues 1a sont ensuite empilées à l'étape iv) en vue de leur emballage pour commercialisation ou de leur utilisation.

La figure 5 illustre l'utilisation d'une feuille de bois cousue 1a selon l'invention, à savoir un dispositif de protection de plants végétaux dans lequel la feuille de bois cousue 1a est enroulée sur elle-même (ou est destinée à être enroulée sur elle-même si elle est commercialisée à plat, ce qui facilite son stockage et son transport).

En effet, la feuille de bois, malgré sa finesse, et grâce au seul renforcement des lignes de coutures réparties sur toute sa hauteur, est autoportante et peut être utilisée autour et à distance des plants végétaux, sans appui contre lesdits plants.

Lorsque la feuille 1a est enroulée sur elle-même, les bords longitudinaux 1b de la feuille 1a peuvent être mis en regard l'un de l'autre sans recouvrement, ou, comme cela est illustré sur la figure 5, la feuille peut présenter une zone ZR de recouvrement ou de chevauchement des bords longitudinaux 1b de la feuille.

Si les feuilles cousues 1a sont mises en forme de tube lors de la fabrication, il peut être choisit de coudre les bords longitudinaux 1b de manière à les maintenir l'un contre l'autre ou l'un en regard de l'autre par au moins une ligne de couture.

Alternativement, les feuilles cousues 1a comme dispositif de protection de plant végétal selon l'invention peuvent avantageusement être commercialisées à plat, ce qui facilite l'emballage, le transport, le stockage et la manutention.

Dans ce cas, il peut être utile de prévoir un moyen de maintien en forme de tube lors de l'utilisation. Ce moyen de maintien vise simplement à maintenir le tube sur place, éventuellement bord à bord, mais il ne sert pas à le soutenir, car le dispositif selon l'invention est autoportant et peut s'étendre autour et à distance du plant sans prendre appui contre lui.

Il peut s'agir, par exemple, d'une baguette de bois fendue apte à pincer et maintenir les deux bords longitudinaux 1b l'un contre l'autre dans la zone de recouvrement.

La figure 5 illustre une autre possibilité dans laquelle un piquet de tuteurage 20 est prévu pour maintenir la feuille cousue en position d'utilisation.

Dans ce mode de réalisation, le piquet de tuteurage est muni d'une pointe 21 (visible par transparence au travers du tube formé par la feuille cousue 1a) à une première extrémité et d'une encoche 22.

Selon l'invention, cette encoche 22 est agencée à une distance de la pointe 21 telle que lorsque le piquet 20 est enfoncé dans la terre dans le sens de la flèche F3, l'encoche 22 vient recouvrir (flèche F4) et pincer les bords longitudinaux 1b de la feuille 1a pour maintenir la feuille enroulée sur elle-même en position d'utilisation.

D'autres systèmes de maintien peuvent être prévus sans pour cela sortir de l'invention.

Ainsi, pour mettre en oeuvre un dispositif de protection de plants végétaux selon l'invention, on commence par sélectionner une feuille de bois cousue 1a, puis on enroule la feuille de bois cousue sur elle-même et on la dispose autour d'un plant végétal à protéger. On la maintient ensuite dans cette position à l'aide d'un moyen de fixation, comme par exemple le piquet de tuteurage 20 muni d'une encoche 22.

Ainsi, grâce aux coutures perpendiculaires à la direction d'extension des fibres du bois, donc à la direction de déchirure facile de la feuille, une entaille dans la feuille ne se propagera pas latéralement. Quand bien même elle le ferait, suite à plusieurs coups reçus ou par dégradation due aux intempéries, les lignes de couture maintiendront les morceaux ensemble, tout le temps de la durée d'utilisation nécessaire du tube de protection.

En cinq ans, qui est la durée d'utilisation nécessaire moyenne, la feuille de bois cousue conservera sa fonction première, tout en commençant à se dégrader par la partie en contact avec le sol. Lorsque l'arbre grossira, la force exercée contre la feuille déchirera les coutures.

La feuille de bois ou les morceaux qui la constituent tomberont alors sur le sol et sa biodégradation se terminera, nourrissant, au passage, le sol à proximité de l'arbre.

D'autres applications de la feuille de bois cousue 1a selon sont également possibles, telles que la fabrication de cagettes plus résistantes, de palissades pour habiller une barrière, de bordures temporaires pour le jardin.,

Dans le domaine de la plantation d'arbres et de la sylviculture, l'invention présente une solution pour la protection des arbres, des plantes forestières et des plantes grimpantes. Il s'agit d'un système de protection des plants d'arbres ou d'abris pour les plants d'arbres utilisant une structure tubulaire rigide fabriquée à partir de matériaux écologiques, biodégradables et compostables.

Une utilisation préférée de cette invention est de protéger les plantes contre le broutage et frottis des animaux sauvages et domestiques, ainsi que d'atténuer les dommages causés par le frottement ou la friction. Grâce à l'utilisation de matériaux aux caractéristiques et aux agencements spécifiques, le système de protection pour arbres garantit une croissance et un taux de survie optimaux des plantes, tout en préservant la durabilité et l'équilibre écologique.

Les abris pour arbres sont conçus sous forme tubulaire, ce qui constitue une barrière physique solide et fiable autour des jeunes plantes. L'utilisation de structures tubulaires rigides garantit la stabilité et la longévité des abris, ce qui leur permet de résister à diverses conditions environnementales et pressions externes. Les matériaux utilisés pour la construction de ces abris sont sélectionnés pour trouver un équilibre entre durabilité et biodégradabilité, garantissant ainsi un impact minimal sur l'écosystème à long terme.

Le bois, connu pour sa solidité et son esthétique naturelle, offre une protection fiable tout en se fondant harmonieusement dans l'environnement. En outre, les fibres du bois contribuent à la solidité générale des abris.

Le fil textile utilisé pour les coutures est choisi en matériau biodégradable, tel que du coton, lin, ou autres fibres naturelles.

La nature biodégradable et compostable de ces matériaux garantit que les abris se décomposent progressivement au fil du temps, éliminant ainsi la nécessité d'un enlèvement manuel.

Dans certains modes de réalisation, en se dégradant ou lorsqu'il pleut, les abris peuvent libérer des composés dans le sol, ce qui l'enrichit et favorise la croissance de plantes saines. Cette approche respectueuse de l'environnement minimise les déchets et permet un processus de plantation d'arbres plus durable.

Les abris pour arbres sont conçus pour être facilement installés et peuvent accueillir une grande variété d'espèces d'arbres et de plantes. Leurs tailles ajustables et leurs structures flexibles répondent aux besoins uniques des différents types de plantes, favorisant ainsi des conditions de croissance optimales. Les abris offrent également un microclimat qui protège les jeunes plantes des températures extrêmes, du vent et d'un ensoleillement excessif, augmentant ainsi leurs chances de survie.

L'épaisseur de la feuille de bois permet à la lumière de diffuser dans le tube pour la croissance de la plante. Alternativement, il est possible de prévoir une pluralité de trous afin de laisser passer partiellement les rayons du soleil.

Dans l'ensemble, ce système innovant d'abris pour les arbres représente une avancée significative dans les techniques de plantation d'arbres. En incorporant des matériaux biodégradables et compostables, il offre une solution pratique et durable pour protéger les jeunes plants des animaux brouteurs et réduire les dommages causés par les frottements. En mettant l'accent sur l'équilibre écologique et l'impact environnemental à long terme, cette invention témoigne d'une approche écologique de la protection des arbres dans les pratiques forestières modernes.

La possibilité de commercialiser les abris à plat, est également un avantage important, car de nombreuses feuilles peuvent être transportées en une fois, limitant ainsi la consommation d'hydrocarbure lors du transport.

## Revendications

1. Dispositif de protection de plants végétaux comprenant une feuille de bois (1a) déroulé ou tranché présentant une première dimension longitudinale (h) parallèle à une direction (X-X) d'extension des fibres du bois et une deuxième dimension transversale (L) perpendiculaire à la direction longitudinale (h), **caractérisé en ce que** la feuille (1a) comprend une pluralité de lignes de couture de fil textile (2) s'étendant transversalement, perpendiculairement à la direction longitudinale (X-X), la feuille de bois étant enroulée sur elle-même ou destinée à être enroulée sur elle-même.

2. Dispositif de protection de plants végétaux selon la revendication 1, dans lequel lorsque la feuille (1a) est enroulée sur elle-même, les bords longitudinaux (1b) de la feuille sont en regard l'un de l'autre.

3. Dispositif de protection de plants végétaux selon la revendication 1, dans lequel lorsque la feuille (1a) est enroulée sur elle-même, elle présente une zone de recouvrement (ZR) des bords longitudinaux (1b) de la feuille.

4. Dispositif de protection de plants végétaux selon l'une quelconque des revendications 1 à 3, comprenant, en outre, un piquet (20) muni d'une pointe (21) et d'une encoche (22) agencée à une distance de la pointe telle qu'en position d'utilisation, l'encoche recouvre les bords longitudinaux de la feuille et maintient la feuille enroulée sur elle-même.

5. Dispositif de protection de plants végétaux selon l'une quelconque des revendications 1 à 4, dans lequel les bords longitudinaux (1b) de la feuille sont maintenus l'un contre l'autre ou l'un en regard de l'autre par au moins une ligne de couture.

6. Dispositif de protection de plants végétaux selon l'une quelconque des revendications 1 à 5, dans lequel la feuille de bois (1a) présente une épaisseur (e) comprise en 1 et 3 millimètres.

7. Dispositif de protection de plants végétaux selon l'une quelconque des revendications 1 à 6, dans lequel les lignes de coutures (2) sont espacées d'une distance (D1) comprise entre 1 et 15 centimètres, de préférence entre 8 et 10 centimètres.

8. Dispositif de protection de plants végétaux selon l'une quelconque des revendications 1 à 7, dans lequel les lignes de coutures présentent des points de percement (2a) de la feuille de bois espacés d'une distance comprise entre 5 et 20 millimètres.

9. Dispositif de protection de plants végétaux selon l'une quelconque des revendications 1 à 8, dans lequel le fil textile est dans une matière choisie parmi les fibres naturelles telles que le lin, ou le coton.

10. Dispositif de protection de plants végétaux selon l'une quelconque des revendications 1 à 9, dans lequel la feuille de bois comprend une pluralité de trous (3) de passage de la lumière.

11. Dispositif de protection de plants végétaux selon l'une quelconque des revendications 1 à 10, dans lequel le bois est imprégné d'une solution comprenant au moins un des éléments pris parmi : un traitement phytosanitaire, un engrais, un répulsif ou un mélange de ceux-ci.

12. Procédé de mise en oeuvre d'un dispositif de protection de plants végétaux selon l'une quelconque des revendications 1 à 11, **caractérisé en ce qu'**il comprend les étapes suivantes :
α) sélectionner un dispositif de protection de plants végétaux selon l'une quelconque des revendications 1 à 11 ;
β) enrouler la feuille de bois (1a) sur elle-même ;
y) disposer la feuille de bois (1a) enroulée autour d'un plant végétal à protéger et la maintenir dans cette position à l'aide d'un moyen de fixation (20-22).
